# EUROPÄISCHE PATENTSCHRIFT

(11) **EP 0 329 743 B1**
(45) Veröffentlichungstag und Bekanntmachung des Hinweises auf die Patenterteilung: **20.04.1994**
(21) Anmeldenummer: 88907242.7
(22) Anmeldetag: 26.08.1988
(51) Int. Cl.: G02B 7/00, G02B 7/02

(54) **FÜHRUNG FÜR BEWEGLICHE OPTIKBAUGRUPPEN**
GUIDE FOR MOVABLE OPTICAL ASSEMBLIES
GUIDE POUR ENSEMBLES OPTIQUES MOBILES

(30) Priorität: 02.09.1987 DE 3729331
(43) Veröffentlichungstag der Anmeldung: 30.08.1989
(73) Patentinhaber: Optische Werke G. Rodenstock, 80469 München (DE)
(72) Erfinder: SCHEHRER, Ingrid, D-8000 München 22 (DE); GRIMMINGER, Rolf-Dietrich, D-8042 Oberschlei heim (DE)
(86) Internationale Anmeldenummer: DE8800521
(87) Internationale Veröffentlichungsnummer: WO8902091

(56) Entgegenhaltungen:
- DE-B- 2 137 490
- FR-A- 2 144 653
- US-A- 4 236 790
- US-A- 4 269 479
- IBM TECHNICAL DISCLOSURE BULLETIN, col. 22, no. 8A, January 1980, pp 3088-3089 : "PRE-ALIGNED LENS MOUNTING ASSEMBLY" R.W. Crist and R.P. Rippstein

## Beschreibung

Die Erfindung betrifft ein Verfahren zum Herstellen eines optischen Systems, bei dem eine erste Optikbaugruppe in eine innere Fassung und eine gegenüber der ersten Optikbaugruppe bewegliche weitere Optikbaugruppe in eine äußere Fassung aufgenommen wird und die Fassungen mit Spiel ineinander angeordnet werden, wobei sich zwischen den Fassungen ein Gleitlager befindet.

Die beiden beweglichen Optikbaugruppen bilden eine Führung. Unter dem Begriff "Führung" sind alle Führungsarten zu verstehen, die eine Rotations- oder eine Translationsbewegung oder eine kombinierte Rotations- und Translationsbewegung, wie beispielsweise Gewinde, zulassen.

Bei derartigen, für geringe Gleitgeschwindigkeiten bzw. niedrige Drehzahlen bestimmten Führungen besteht unter anderem das Problem, daß die Lage der optischen Achsen der in der inneren und der äußeren Fassung aufgenommenen Optikbaugruppen durch das Paßspiel zwischen dem spanabhebend hergestellten Gleitlager und der Fassung beeinträchtigt wird. Eine Reduzierung der Fassungstoleranzen führt zu einer Erhöhung der Herstellkosten und ist zudem nur begrenzt durchführbar. Eine Verringerung des Spiels auf weniger als 5 µm ist nicht realisierbar. Innerhalb der Toleranzen der Fassung kann es zu einer Verkippung der beiden Fassungen und damit zu einer Verkippung der optischen Achsen der Optikbaugruppen kommen.

Ein weiterer Nachteil bekannter Führungen ist der sogenannte "stick-slip"-Effekt, der aufgrund der im Vergleich zur Gleitreibung höheren Haftreibung eine feinfühlige Verstellung der Fassungen verhindert. Dies ist aber gerade bei kleinen Verstellwegen ungünstig. Zudem ist es in manchen Fällen schwierig, paßgerechte Fassungen herzustellen, beispielsweise auf der inneren Oberfläche einer zylindrischen Fassung mit großer Längserstreckung.

Gleitlager werden herkömmlicherweise spanabhebend gefertigt und können aus verschiedenen Materialien, unter anderem aus Kunststoff oder Metall, bestehen.

In der FR-A-2 144 653 wird eine Oberflächenbeschichtung für mechanische Gleitflächen in Objektiven beschrieben. Dabei sind zwei Kunststoff-Schieberohre ineinander angeordnet und relativ zueinander bewegbar. Das innere Schieberohr ist am Außendurchmesser mit einer fettbeständigen Dispersionskleberschicht besprüht. In diese Schicht sind Kunststoff-Flocken elektrostatisch senkrecht eingeschossen.

Durch die US-A 4 236 79o ist ein optisches System mit einer Optikbaugruppe und zwei zueinander beweglichen Fassungen bekannt. Zwischen der äußeren und der inneren Fassung befinden sich O-Ringe. Durch diese bekannte Vorrichtung soll eine Temperaturkompensation erzielt werden.

Der Erfindung liegt die Aufgabe zugrunde, ein kostengünstiges Verfahren zum Herstellen eines optischen Systems der eingangs beschriebenen Art anzugeben, bei dem auf einfache und sichere Weise erreicht werden kann, daß das Spiel zwischen Gleitlager und Fassung minimal ist und beim Bewegen der Fassungen zueinander praktisch keine Verkippung erfolgt.

Diese Aufgabe wird erfindungsgemäß dadurch gelöst, daß zwischen die Fassungen ein aushärtbares Material in flüssigem Zustand eingebracht wird, derart, daß es sich wenigstens in einem Teilbereich des Umfangs der Fassungen erstreckt, mit der einen Fassung eine ortsfeste Verbindung eingeht, und an der Oberfläche der anderen Fassung gleitfähig anliegt und daß das Material zum Aushärten gebracht wird.

Bei dem vorgeschlagenen Verfahren wird als Gleitlager ein Gleitelement gebildet, das der individuellen Form der Fassung, an der das Lager anliegt und auf deren Oberfläche das Lager gleitet, optimal angepasst ist. Bei spanabhebend hergestellten Führungen kann das Spiel, das bei einer nach dem vorgeschlagenen Verfahren hergestellten Führung erreicht werden kann, auch mit gepaarten Teilen nicht gezielt erreicht werden.

Das Gleitlager der nach dem vorgeschlagenen Verfahren hergestellten Führung kann auf einfache und sichere Weise zwischen die bereits vormontierten und beispielsweise in einer zentrierten Position befindlichen Fassungen eingebracht werden. Da es in flüssigem, vorzugsweise in zähflüssigem Zustand zwischen die Fassungen eingebracht wird und erst aushärtet, nachdem es sich der Form der beiden Fassungen angepasst hat, ist praktisch kein Spiel zwischen Gleitlager und Fassung vorhanden. Erfindungsgemäß liegt das Gleitlager an einer der Fassungen an, während es mit der anderen Fassung verbunden ist, beispielsweise an dieser haftet. Um zu vermeiden, daß das Gleitelement an beiden Fassungen haftet, ist die Fassungsoberfläche, an der das Gleitelement lediglich anliegen soll, in an sich bekannter Weise vorbehandelt. Nach einer bevorzugten Ausgestaltung der Erfindung wird auf der Fassungsoberfläche, an der das aushärtbare Material anliegen soll, ein handelsübliches Trennmittel zwischen Fassungsoberfläche und Element aufgebracht, bevor das aushärtbare Material in flüssigem Zustand zwischen die Fassungen gebracht wird.

Das Element kann derart an der Oberfläche der einen Fassung anliegen bzw. mit der Oberfläche der anderen Fassung verbunden sein, daß eine spielfreie Führung entsteht, d.h., das Spiel kann unter 5 µm und falls erforderlich auf ca. 1 - 2 µm reduziert werden.

Es hat sich gezeigt, daß dieser überraschende Vorteil mit einem Gleitelement geringer Größe erzielt werden kann, dessen Führungslänge um einen Faktor 2 oder 3 kleiner als die Führungslängen herkömmlicher Gleitlager ist. Somit ist eine raumsparende Konstruktion möglich. Zudem ist es nicht erforderlich, beide Fassungen als Paarungsteile mit vorgeschriebener Fassung auszubilden; lediglich die Fassung, an der das Gleitelement anliegt, ist mit einer bestimmten Oberflächengenauigkeit zu fertigen. Trotz des erreichbar geringen Spiels ist somit die vorgeschlagene Fassung kostengünstig herzustellen.

In einer bevorzugten Ausgestaltung der Erfindung wird das aushärtbare Material an wenigstens drei voneinander beabstandeten Stellen des Umfangs der Fassung eingebracht. Es hat sich als besonders vorteilhaft erwiesen, wenn das erfindungsgemäße Element nicht als voll umlaufendes oder sich in einem weiten Winkelbereich erstreckendes Element ausgebildet ist. Als besonders günstig haben sich drei voneinander beabstandete - vorzugsweise in einem Winkelabstand von ca. 12o° angeordnete - Elemente erwiesen. Aufgrund der geringen Materialmengen spielen Volumenänderungen der Elemente, die beispielsweise auf Quellen des Materials zurückzuführen sind, nur eine unbedeutende Rolle.

Für optische Baugruppen, deren Fassungen nicht nur einmal, sondern häufig zu verschieben sind, hat es sich als zweckmäßig erwiesen, wenn das Material des bzw. der Elemente einen geringen Abrieb und einen geringen Reibungsbeiwert bei sehr kleinen Gleitgeschwindigkeiten besitzt. Vorzugsweise hat der Reibungsbeiwert bei Gleitgeschwindigkeiten zwischen 0 und 1 m/min einen Wert unter o,1o.

Weitere bevorzugte Ausgestaltungen der Erfindungen sind in den Unteransprüche 6 und 7 angegeben. Das in Unteranspruch 7 angegebene Material (Handelsbezeichnung SKC-7) eignet sich in ganz besonderem Maß, da es sehr hart ist, eine sehr geringe Feuchtigkeitsaufnahme und ausgezeichnete Gleiteigenschaften bei geringem Abrieb besitzt und beim Aushärten einen nicht meßbaren Schwund aufweist, wobei die Haftreibungs- und Gleitreibungskoeffizienten nahezu gleich groß sind. Aufgrund dieser Eigenschaften entsteht eine spielfreie Führung mit guten Gleiteigenschaften, die zudem keinen "stick-slip"-Effekt zeigt, die also ein feinfühliges Verstellen bei kleinen Wegen ermöglicht.

In einer weiteren bevorzugten Ausgestaltung der Erfindung wird die Oberfläche der Fassung, an der das Element anliegt, im Anlagebereich mit einem Gewinde versehen. In dieser Ausgestaltung ist lediglich in einer Fassung ein Gewinde vorzusehen, da das erfindungsgemäß vorgeschlagene Gleitelement nach dem Einbringen und Aushärten ein gleichartiges Gewinde besitzt, so daß die beiden Fassungen durch Drehen gegeneinander spielfrei verschoben werden können.

Grundsätzlich ist es jedoch auch möglich, daß die Fassung, die gegenüber dem Gleitelement beweglich angeordnet ist, in demjenigen Bereich, in dem sie mit dem Gleitelement in Berührung steht, mit einer glatten Oberfläche versehen ist. Soll ein maximales Spiel von ca. 1 µm bis 2 µm erreicht werden, so haben sich Rauheitswerte unter Ra = o,8 als vorteilhaft erwiesen.

Nach einer weiteren bevorzugten Ausgestaltung der Erfindung ist mindestens eine der Fassungen in radialer Richtung elastisch verformbar. Die elastische Verformbarkeit kann z.B. durch dünnwandige Bauweise oder entsprechendes Material erzielt werden.

Aufgrund der in radialer Richtung elastischen Ausführung der einen Fassung können insbesondere in Verbindung mit der punktweisen Anordnung der Gleitelemente Volumenänderungen des Gleitelementes, die durch Feuchte oder Temperatur ausgelöst sein können, sowie unterschiedliche radiale Ausdehnung der beiden Fassungen ausgeglichen werden.

Dies ist vor allem wichtig bei Anordnungen zur Temperaturkompensation. Dort kommen in an sich bekannter Weise Materialien mit sehr unterschiedlichen Wärmeausdehnungskoeffizienten zum Einsatz. Bei herkömmlichen Führungen aus derartigen Materialien führt die Wärmeausdehnung zu einer Verspannung der Fassungen zueinander.

Die in Unteranspruch 1o beanspruchte bevorzugte Ausgestaltung der Erfindung hat sich als besonders zweckmäßig erwiesen. Werden die beiden Fassungen in die Endstellung gebracht, d.h. in eine Stellung außerhalb des zur Einstellung der jeweiligen Optikbaugruppen erforderlichen Bereichs, so gleiten die Anlageflächen der beiden Fassungen aufeinander auf, bis eine starre Position erreicht ist. Die Anlageflächen sind so gestaltet, daß die Fassungen in dieser Position zentriert sind. Wird in dieser Stellung das Material für das bzw. die Gleitelemet(e) zwischen die Fassungen gebracht, so wird eine spielfreie Führung mit stets zentrierten Fassungen gebildet.

In den Unteransprüchen 11 und 12 sind bevorzugte Ausgestaltungen der Erfindung angegeben, die einen besonders einfachen Aufbau der Führung und eine besonders einfache Anordnung eines Gleitelements ermöglichen. Gemäß Unteranspruch 12 ist ein besonders sicherer Halt der Gleitelemente gewährleistet.

Im folgenden wird anhand einer schematischen Skizze ein Ausführungsbeispiel der Erfindung erläutert. In der Skizze ist ein Schnitt durch ein aus zwei Optikbaugruppen bestehendes optisches System dargestellt. Eine Optikbaugruppe ist in einer inneren Fassung 1, die andere Optikbaugruppe in einer äußeren Fassung 2 aufgenommen. Die zylindrischen Fassungen 1,2 sind ineinander angeordnet, wobei die innere Fassung 1 gegenüber der äußeren Fassung 2 über ein Fokussiergewinde 9 verdreht werden kann.

Eine Feder 1o dient dazu, das Spiel des Fokussiergewindes 9 zu unterdrücken. Diese hier dargestellte, sehr aufwenige Fokussiereinstellung kann auch durch die in Unteranspruch 7 beanspruchte Ausgestaltung ersetzt werden. Hierbei ist nur eine Fassung mit einem Gewinde vorzusehen. Fassung 2 ist im entsprechenden Bereich lediglich mit einer Bohrung 3 zu versehen, durch die die Elemente auf das Gewinde abgesetzt werden.

In dem mit A bezeichneten Bereich sind in der äußeren Fassung 2 drei Bohrungen 3, die voneinander einen Winkelabstand von 12o° aufweisen, vorgesehen. Die Bohrungen 3 sind etwa in dem Bereich angeordnet, in dem sich der dem Fokussiergewinde 9 abgewandte Endbereich der inneren Fassung 1 befindet. Für die Zentrierung der beiden Fassungen 1,2 sind Anlagenflächen 7,8, beispielsweise 45° - Schrägen vorgesehen. Die als Zentrierhilfe dienenden Anlageflächen sind so angeordnet, daß sie sich nur in einer zur Montage und Zentrierung der beiden Fassungen dienenden Position berühren. Diese Endstellung kann durch Verdrehen der Fassungen über das Fokussiergewinde eingestellt werden. Die Flächen 7,8 sind so gestaltet, daß beide Fassungen zentriert sind, sobald sie über diese Flächen starr aneinander anliegen.

In dieser Endstellung werden die Gleitelemente 4 zwischen den Fassungen 1,2 angeordnet.

Dazu wird über die Bohrungen 3 ein mit einem Härter aushärtbares Harz, insbesondere ein Polyadditionsklebstoff auf Epoxidharzbasis in flüssiger Form zwischen die Fassungen 1,2 gebracht. Das Gleitelement 4 des Ausführungsbeispiels kann ein mit anorganischen, inerten Füllstoffen formuliertes Bisphenol A-Epichlorhydrin-Reaktionsprodukt mit dem Handelsnamen SXC 7 sein.

Dieses Material haftet auf der Oberfläche der äußeren Fassung 2. Um zu verhindern, daß das Material auch auf der Oberfläche der inneren Fassung 1 haftet, wird deren Oberfläche in dem mit A bezeichneten Bereich mit einem handelsüblichen Trennmittel beschichtet (beispielsweise 1 µm Schichtdicke), bevor die beiden Fassungen 1,2 montiert werden und somit auch bevor das Material für die Gleitelemente 4 in flüssigem Zustand in die Bohrungen 3 eingebracht wird.

Nach dem Aushärten kann die Trennung der inneren Fassung von der äußeren Fassung, bzw. dem mit dieser Fassung verbundenen Gleitelement durch einen kurzen Stoß vorgenommen werden. Die Gleitelemente erstrecken sich zwischen den Fassungsoberflächen, die einen Abstand von etwa o,1 bis o,5 mm haben. Die Gleitelemente 4 besitzen einen mittleren Durchmesser von z.B. 1 mm und greifen formschlüssig in die Bohrung 3 ein.

Zusammenfassend ist festzustellen, daß die nach dem vorgeschlagenen Verfahren hergestellte Führung eine spielfreie Führung ist, die gute Gleiteigenschaften ohne "stick-slip" und bei entsprechend konstruktiv gestalteten Teilen hohe Steifigkeit bietet. Durch das geringe Volumen der Gleitelemente ist eine raumsparende Konstruktion möglich.

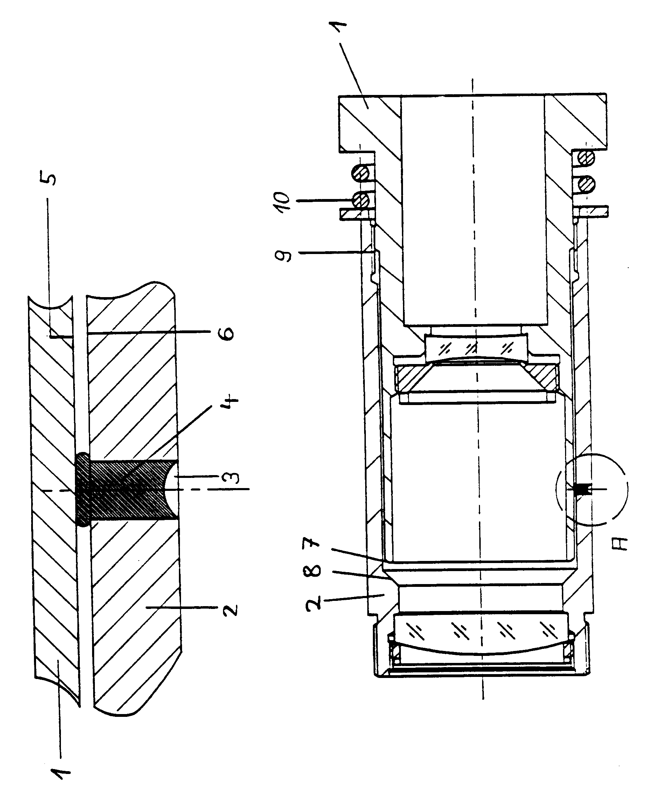

## Patentansprüche

1. Verfahren zum Herstellen eines optischen Systems, bei dem eine erste Optikbaugruppe in eine innere Fassung (1) und eine gegenüber der ersten Optikbaugruppe bewegliche weitere Optikbaugruppe in eine äußere Fassung (2) aufgenommen wird und die Fassungen mit Spiel ineinander angeordnet werden, wobei sich zwischen den Fassungen ein Gleitlager befindet, dadurch gekennzeichnnet, daß zwischen die Fassungen (1,2) ein aushärtbares Material in flüssigem Zustand eingebracht wird, derart, daß es sich wenigstens in einem Teilbereich des Umfangs der Fassungen (1,2) erstreckt, mit der einen Fassung (2) eine ortsfeste Verbindung eingeht, und an der Oberfläche (5) der anderen Fassung (1) gleitfähig anliegt und daß das Material zum Aushärten gebracht wird.

2. Verfahren nach Anspruch 1, dadurch gekennzeichnet, daß auf der Fassungsoberfläche (5) an der das aushärtbare Material anliegen soll, ein Trennmittel auf die Fassungsoberfläche (5) aufgebracht wird, bevor das aushärtbare Material in flüssigem Zustand zwischen die Fassungen (1,2) gebracht wird.

3. Verfahren nach einem der Ansprüche 1 oder 2, dadurch gekennzeichnet, daß das aushärtbare Material an wenigstens drei voneinander beabstandeten Stellen des Umfangs der Fassung (1,2) eingebracht wird.

4. Verfahren nach einem der Ansprüche 1-3, dadurch gekennzeichnet, daß das Material nach dem Aushärten einen geringen Abrieb und einen geringen Reibungsbeiwert bei sehr kleinen Gleitgeschwindigkeiten besitzt.

5. Verfahren nach Anspruch 4, dadurch gekennzeichnet, daß der Reibungsbeiwert bei Gleitgeschwindigkeiten zwischen 0 und 1 m/min. kleiner als 0,1o ist.

6. Verfahren nach einem der Ansprüche 1-5, dadurch gekennzeichnet, daß das Material ein mit einem Härter aushärtbares Harz, insbesondere ein Polyadditionsklebstoff auf Epoxidharzbasis ist, das mit einem aliphatischen Polyamin ausgehärtet wird.

7. Verfahren nach Anspruch 6, dadurch gekennzeichnet, daß das Material ein mit anorganischen inerten Füllstoffen formuliertes Bisphenol A-Epichlorhydrin-Reaktionsprodukt ist.

8. Verfahren nach einem der Ansprüche 1-7, dadurch gekennzeichnet, daß die Oberfläche (5) der Fassung (1), an der das Material (4) anliegt, vor dem Ineinanderanordnen der Fassungen (1,2) im Anlagebereich mit einem Gewinde versehen wird.

9. Verfahren nach einem der Ansprüche 1-9, dadurch gekennzeichnet, daß mindestens eine der Fassungen (1,2) in radialer Richtung elastisch verformbar ist.

10. Verfahren nach einem der Ansprüche 1-9, dadurch gekennzeichnet, daß die innere und die äußere Fassung (1,2) zum Zweck der Zentrierung in eine Endstellung gebracht werden, wobei sie über Anlageflächen (7,8) aufeinander aufgleiten und in der Endstellung eine zentrierte Position einnehmen.

11. Verfahren nach einem der Ansprüche 1-1o, dadurch gekennzeichnet, daß das aushärtbare Material über eine Bohrung (3) in der äußeren Fassung (2), vorzugsweise über drei voneinander beabstandete Bohrungen in flüssigem Zustand zwischen die Fassungen (1,2) eingebracht wird.

12. Verfahren nach Anspruch 11, dadurch gekennzeichnet, daß das aushärtbare Material derart in die Bohrung(en) eingebracht wird, daß es in ausgehärtetem Zustand formschlüssig in die zugehörige Bohrung (3) eingreift.

## Claims

1. Process for the manufacture of an optical system in which a first optical assembly is taken up into an inner mount (1) and a second optical assembly, movable relative to the first optical assembly, is taken up into an outer mount (2) and the mounts are positioned to each other with play so that there is a sliding bearing between the mounts, characterised by the fact that a material which can be hardened is introduced in a fluid state between the mounts (1,2) in such a way that it covers at least a partial area of the circumference of the mounts (1,2), makes a locally fast bond with the one mount (2) and contacts the surface (5) of the other mount (1) in a slidable fashion and that the material is induced to harden.

2. Process according to Claim 1, characterised by the fact that a parting compound is applied to the mount surface (5) which the material which can be hardened should contact before the material which can be hardened is introduced between the mounts (1,2) in a fluid state.

3. Process according to either of Claims 1 or 2, characterised by the fact that the material which can be hardened is introduced at at least three spaces points on the circumference of the mount (1,2).

4. Process according to any of Claims 1-3, characterised by the fact that after hardening the material possesses low wear and a low friction coefficient at very low slide speeds.

5. Process according to Claim 4, characterised by the fact that the friction coefficient is less than 0.10 at slide speeds between 0 and 1 m/min.

6. Process according to any of Claims 1 - 5, characterised by the fact that the material is a resin, in particular a polyaddition glue on an epoxy resin base, which can be hardened with a hardener and which is hardened with an aliphatic polyamine.

7. Process according to Claim 6, characterised by the fact that the material is a bisphenol A-epichlorhydrin reaction product formulated with inorganic, inert fillers.

8. Process according to any of Claims 1 - 7, characterised by the fact that the surface (5) of the mount (1) which the material (4) contacts is provided with a thread in the contact area before the mounts (1,2) are positioned one inside the other.

9. Process according to any of Claims 1-9, characterised by the fact that at least one of the mounts (1,2) can be elastically deformed in a radial direction.

10. Process according to any of Claims 1-9, characterised by the fact that the inner and the outer mount (1,2) are brought into a final position for the purpose of centering where they slide on each other over contact surfaces (7,8) and take up a centred position in the final position.

11. Process according to any of Claims 1-10, characterised by the fact that the material which can be hardened is introduced in a fluid state between the mounts (1,2) through a borehole (3) in the outer mount (2), preferably through three boreholes at a distance to each other.

12. Process according to Claim 11, characterised by the fact that the material which can be hardened is introduced into the borehole(s) in such a way that in a hardened state it interlocks in the corresponding borehole (3).

## Revendications

1. Procédé pour fabriquer un système optique, selon lequel un premier ensemble optique est reçu dans une monture intérieure (1), un autre ensemble optique, mobile par rapport au premier ensemble, est reçu dans une monture extérieure (2) et les montures sont disposées avec jeu l'une dans l'autre, avec interposition d'un palier lisse entre les montures, caractérise en ce que l'on introduit entre les montures (1, 2), à l'état liquide, un matériau durcissable, de manière qu'il s'étende au moins sur une partie de la périphérie des montures (1, 2), établisse avec une monture (2) une liaison fixe et s'applique contre la surface (5) de l'autre monture (1) de façon à pouvoir glisser sur elle, et que l'on fait durcir le matériau.

2. Procédé selon la revendication 1, caractérisé en ce que, avant l'introduction à l'état liquide du matériau durcissable entre les montures (1, 2), on applique un agent de séparation sur la surface de monture (5) contre laquelle doit s'appliquer le matériau durcissable.

3. Procédé selon la revendication 1 ou 2, caractérisé en ce que l'on introduit le matériau durcissable à au moins trois endroits mutuellement espacés de la périphérie de la monture (1, 2).

4. Procédé selon une des revendications 1 - 3, caractérisé en ce que, après le durcissement, le matériau présente une faible abrasion et un faible coefficient de frottement à de très petites vitesses de glissement.

5. Procédé selon la revendication 4, caractérisé en ce que le coefficient de frottement à des vitesses de glissement comprises entre 0 et 1 m/min est inférieur à 0,10.

6. Procédé selon une des revendications 1 - 5, caractérisé en ce que le matériau est une résine durcissable à l'aide d'un durcisseur, en particulier une colle de polyaddition à base de résine époxyde,que l'on fait durcir au moyen d'une polyamine aliphatique.

7. Procédé selon la revendication 6, caractérisé en ce que le matériau est un produit de réaction de bisphénol A/épichlorhydrine, formulé avec des charges inorganiques inertes.

8. Procédé selon une des revendications 1 - 7, caractérisé en ce que, avant la disposition des montures (1, 2) l'une dans l'autre, on forme un filetage dans la zone d'application ou de contact de la surface (5) de la monture (1) contre laquelle doit s'appliquer le matériau (4).

9. Procédé selon une des revendications 1 - 8, caractérisé en ce qu'au moins l'une des montures (1, 2) est élastiquement déformable en direction radiale.

10. Procédé selon une des revendications 1 - 9, caractérisé en ce que, en vue du centrage, on amène les montures intérieure et extérieure (1, 2) à une position extrême par un mouvement au cours duquel elles glissent l'une sur l'autre par des surfaces de contact (5, 8) pour prendre une position centrée à la position extrême.

11. Procédé selon une des revendications 1 - 10, caractérisé en ce que l'on introduit, à l'état liquide, le matériau durcissable entre les montures (1, 2), à travers un perçage (3) pratiqué dans la monture extérieure (2), de préférence à travers trois perçages mutuellement espacés.

12. Procédé selon la revendication 11, caractérisé en ce que l'on introduit le matériau durcissable dans le ou les perçages de manière qu'à l'état durci, il remplisse à complémentarité de formes une partie au moins du perçage (3) concerné.
